# EUROPÄISCHE PATENTSCHRIFT

(11) **EP 0 757 152 B1**
(45) Veröffentlichungstag und Bekanntmachung des Hinweises auf die Patenterteilung: **18.12.2002**
(21) Anmeldenummer: 96112113.4
(22) Anmeldetag: 26.07.1996
(51) Int. Cl.: E06B 7/23

(54) **Strangförmiges Dichtungsprofil**
Profiled sealing strip
Joint d'étanchéité profilé

(30) Priorität: 01.08.1995 DE 29512401 U
(43) Veröffentlichungstag der Anmeldung: 05.02.1997
(73) Patentinhaber: Semperit Aktiengesellschaft Holding, 1013 Wien (AT)
(72) Erfinder: Heigl, Dieter, 94505 Bernried (DE)
(74) Vertreter: Müller, Hans-Jürgen, Dipl.-Ing.

(56) Entgegenhaltungen:
- EP-A- 0 652 346
- DE-A- 4 228 874
- DE-A- 4 314 192
- GB-A- 2 014 636
- GB-A- 2 279 985
- US-A- 5 170 587

## Beschreibung

Die Erfindung bezieht sich auf ein strangförmiges um Ecken umlenkbares Dichtungsprofil aus elastomerem bzw. elastisch verformbarem Material der im Oberbegriff des Anspruchs 1 genannten Gattung.

Ein derartiges Dichtungsprofil ist bereits bekannt (EP-0 652 346 A1). Dabei weist die Dichtlippe einen großen Hohlraum auf, so daß sie wie ein "Schlauch" zusammendrückbar ist. Es dient vor allem zum Abdichten von Fenstern, Türen und Fassaden.

Ferner ist ein Dichtungsprofil bekannt (EP-0 247 533 B1), bei dem die wulstartige Dichtlippe aus zelligem, d.h. zahlreiche kleine Hohlräume aufweisenden Material besteht. Beim Andrücken an beispielsweise eine Fensterscheibe dichtet sie gegenüber Feuchtigkeit ab, während sich eine Stützfläche des Stützschenkels insbesondere an einer anderen Stelle der Fensterscheibe abstützt.

Sofern solche strangförmige Dichtungsprofile erst an Ort und Stelle der Montage, beispielsweise eines Fensters, um Ecken verlegt werden, erhebt sich vielfach das Problem der Bildung von Falten und Taschen. Um solche Nachteile zu vermeiden, wird die Stützfläche des Stützschenkels möglichst nahe an die Dichtfläche der Dichtlippe, insbesondere bis in den Mittelbereich des Dichtungsprofils verlegt, in dem sich ein Ankerfuß zum Verankern in beispielsweise einem Fensterrahmen befindet. Der Nachteil dieser Maßnahme besteht darin, daß der Abstand zwischen Dichtfläche der Dichtlippe und Stützfläche des Stützschenkels verhältnismäßig klein ist.

Der Erfindung liegt die Aufgabe zugrunde, ein Dichtungsprofil dieser Gattung dahingehend zu verbessern, daß es mehr Konstruktionsspielraum mit auch breiteren Dichtungsprofilen und wesentlich größerem Abstand zwischen der Dichtfläche der Dichtlippe und der Stützfläche des Stützschenkels beispielsweise an der Fensterscheibe in der Dichtungsposition ermöglicht.

Die Erfindung ist in den Ansprüchen 1 und 3 gekennzeichnet und in Unteransprüchen sind bevorzugte Ausbildungen beansprucht. Darüber hinaus ergeben sich auch aus der Zeichnung und dem darauf sich beziehenden Beschreibungsteil weitere besonders bevorzugte Ausbildungen der Erfindung.

Durch zelliges Material der Dichtlippe und durch besondere Materialschwächungen des Stützschenkels gelingt die Lösung der oben genannten Aufgabe auf sehr einfache Weise.

An sich ist es bereits bekannt (DE 42 28 874 C2, EP-O-652 346 A1), den Stützschenkel mit Einschnitten zu versehen, die in gleichmäßigem Abstand von 2 bis 20 mm normal auf dem Stützschenkelrand angeordnet sind, so daß sich das Dichtungsprofil besser um Ecken verlegen läßt. Dabei wird jedoch eine schlauchförmige Dichtlippe vorausgesetzt, was Herstellungsprobleme ergibt. Gleichfalls ist es bekannt, den Querschnitt des Stützschenkels so zu schwächen, daß dieser nur noch häutchenartige Verbindungsstege zwischen kompakten Stützschenkelteilen aufweist. Auch diese Ausbildung ergibt Herstellungsprobleme.

Nach einer bevorzugten Ausbildung der Erfindung wird nicht nur die wulstförmige Dichtlippe, sondern auch der Stützschenkel aus zelligem, d.h. kleine porenartige Hohlräume aufweisendem Material hergestellt, wodurch die genannten Eerstellungsprobleme vermeidbar sind und der Abstand zwischen der Dichtfläche der Dichtlippe und der Stützfläche des Stützschenkels möglichst groß gewählt werden, der Wärmeschutzverordnung hinsichtlich einem großen Wärmeübergangswiderstand Rechnung getragen und schließlich auch die Aufgabe gelöst werden kann, die Bildung von Falten und Taschen beim Biegen des strangförmigen Dichtungsprofils um Ecken zu vermeiden.

Vorteile bietet auch eine im wesentlichen wellenförmige Anordnung parallel zueinander verlaufender Schwächungslinien, da hierdurch eine gute gegenseitige Abstützung benachbart durch beispielsweise Einschnitte getrennter Teile des Stützschenkels erfolgt.

Besonders vorteilhaft ist eine Ausbildung der Materialschwächung: hierbei wird der Stützschenkel in zwei im wesentlichen parallel zueinander verlaufende lappenförmige Teile unterteilt, die durch einen Zwischenraum getrennt sind, welcher sich in Profillängsrichtung ausgehend vom Außenrand des Stützschenkels in Richtung zum Basisteil des Dichtungsprofils hinzieht. Die lappenförmigen Stützschenkelteile sind dann im Querschnitt etwa fingerförmig angeordnet und können lippenartig ausgebildet sein. Beim Andrücken beispielsweise einer Fensterscheibe an die Stützfläche des der Fensterscheibe benachbarten Lappens des Stützschenkels wird dieser in Richtung zum anderen Lappen gedrückt, so daß dann in der Abdichtungsposition Teile beider Lappen aufeinanderliegen und sich gegenseitig abstützen. Abhängig von der Profilkonstruktion können hierdurch auch mehrere im Abstand voneinander befindliche Stützflächen am Stützschenkel in der Abdichtungsposition des Dichtungsprofils erreicht werden.

Es hat sich gezeigt, daß trotz verhältnismäßig breiter Dichtungsprofilausbildung, d.h. verhältnismäßig breiter Stützschenkel und einem verhältnismäßig großen Abstand der Stützfläche des Stützschenkels von der Dichtfläche der Dichtlippe überraschenderweise keine Faltenbildung beim Umlenken um Ecken in solcher Weise auftritt, daß die Dichtungsfunktion und die Wärmedämmfunktion gemäß der Wärmeschutzverordnung beeinträchtigt wird. Ausführungsbeispiele der Erfindung werden nun anhand der Zeichnungen näher erläutert. Dabei zeigen:
- Fig. 1: einen Querschnitt durch eine Ausbildung eines erfindungsgemäßen Dichtungsprofils;
- Fig. 2: eine teilweise Aufsicht auf ein Dichtungsprofil von Fig. 1;
- Fig. 3: eine andere Ausbildung eines Dichtungsprofils;
- Fig. 4: eine alternative Ausbildung des Dichtungsprofils mit einem zweilappigen Stützschenkel;
- Fig. 5: eine weitere alternative Ausbildungsform mit einem zweilappigen Stützschenkel;
- Fig. 6: eine Teilaufsicht auf ein Dichtungsprofil mit mehreren alternativen Schwächungslinien des in Fig. 6a im Querschnit gezeigten Dichtungsprofils und
- Fig. 7: eine Teilaufsicht auf ein um eine Ecke gelegtes Dichtungsprofil des in Fig. 7a und 7b schematisch gezeigten Querschnitts.

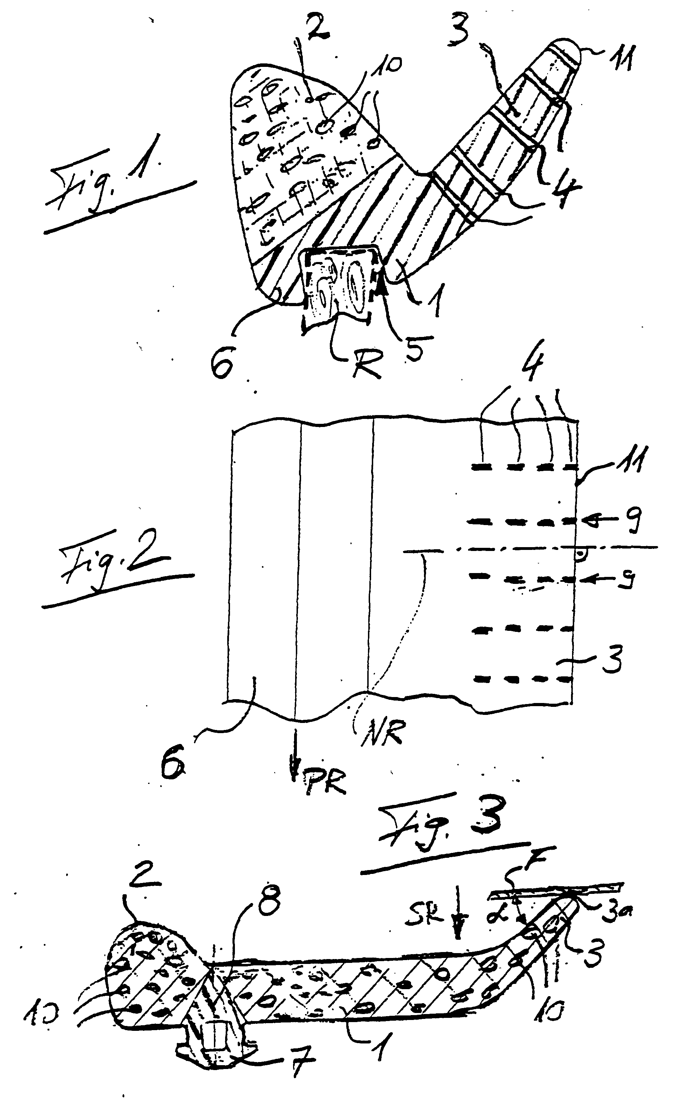

Das in Fig. 1 im Querschnitt gezeigte strangförmige Dichtungsprofil weist in der Mitte den Basisteil 1 aus kompaktem elastomerem Material, insbesondere silikonisiertem EPDM einer Härte von 50 - 80 IRHD auf. Vom Basisteil 1 erstreckt sich nach einer Seite der Stützschenkel 3 bis zu dessen Außenrand 11, während sich an der anderen Seite des Basisteils - im Winkel von etwa 90 Grad zum Stützschenkel 3 - die wulstförmige Dichtungslippe 2 anschließt, die zwar aus gleichem Material wie der Stützschenkel 4 und der Basisteil 1 besteht, jedoch eine insbesondere geschlossen-zellige Struktur mit zahlreichen kleinen porenförmigen Hohlräumen 10 und eine Dichte von 0,2 - 0,8 g/cm³ aufweist. Der Basisteil 1 ist mit einer Aussparung 5 zum Aufdrücken auf einen Rahmen R, beispielsweise einem Fensterrahmen, versehen, so daß die Ecke des Rahmens R wetterseitig von einer Abstützlippe 6 abgedeckt ist.

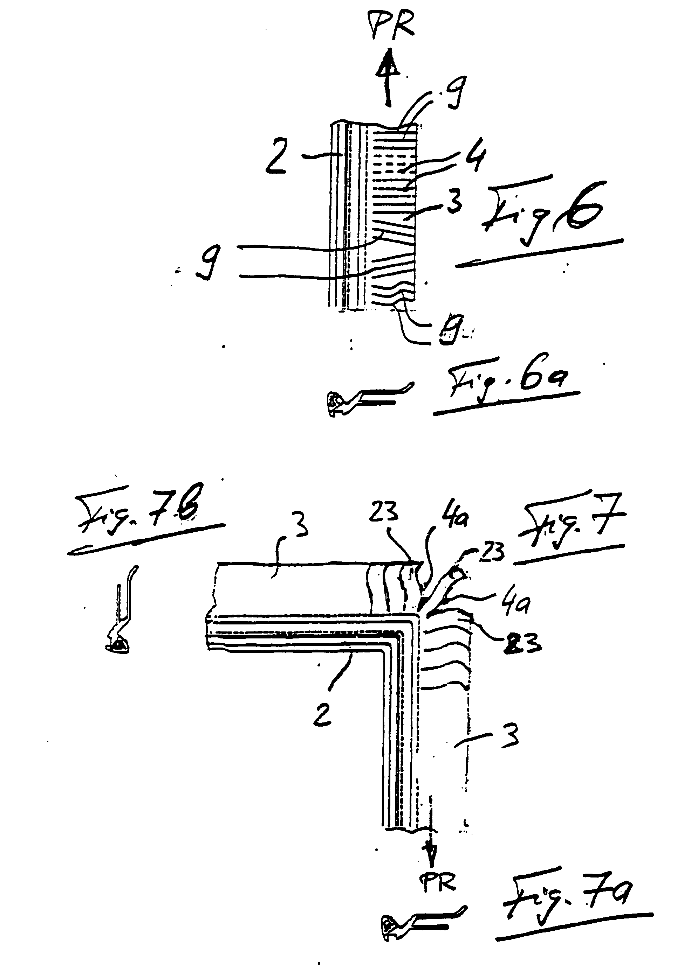

In der Teilaufsicht auf dieses Dichtungsprofil gemäß Fig. 2 ist ersichtlich, daß sich die Perforationslöcher 4 in Form kurzer Schlitze durch den Stützschenkel 3 längs gerader Schwächungslinien 9 erstrecken, welche sich in Normalrichtung NR auf den Außenrand 11 des Stützschenkels 3 hinziehen, während sich das Dichtungsprofil in Profillängsrichtung PR erstreckt.

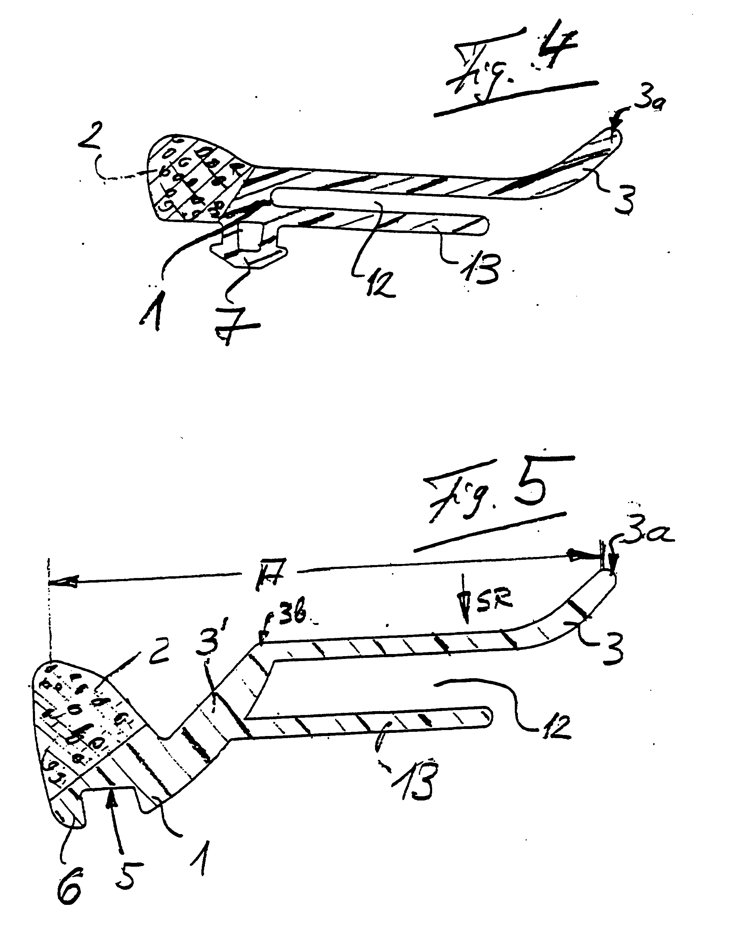

Bei der alternativen Aushildung des Dichtungsprofils nach Fig. 3 dient ein Haltefuß 7 an einer Seite des Basisteils 1 zum Befestigen am Rahmen, indem der Haltefuß 7 in eine Nut im Rahmen eingedrückt wird. Der Haltefuß 7 und der sich daran unmittelbar anschließende Kernbereich 8 des Basisteils 1 bestehen aus kompaktem elastomerem Material, wie Gummi, während sowohl die wulstförmig sich nach der dem Haltefuß 7 abgewandten Seite des Basisteil 1 erstreckende Dichtlippe 2 als auch des Stützschenkels 3 und eines sich zwischen dem Kernbereich 8 und dem Stützschenkel 3 erstreckenden Teils des Basisteils 1 aus geschlossen-zelligem "porösem" Material, wie Moosgummi, bestehen. Nach der Montage am Rahmen wird beim Schließen des Fensters die Fensterscheibe F erst an die Stützfläche 3a des um den Winkel sich aus der Ebene der Fensterscheibe F erstreckenden Teils des Stützschenkels 3 angedrückt, worauf beim weiteren Zudrücken der Fensterscheibe in Schließrichtung SR der Stützschenkel 3 ein Stück weit sich in der gleichen Schließrichtung SR verschwenkt, bis die Fensterscheibe F an die Dichtlippe 2 angreift und diese ein Stück weit zur Bildung einer Dichtfläche zusammendrückt. Bei dieser Ausbildung der Erfindung erfolgt eine zusätzliche Materialschwächung des Stützschenkels 3 durch Einbringen zahlreicher kleiner insbesondere homogen verteilter Hohlräume 10 im Material desselben.

Bei der Ausbildung gemäß Fig. 4 weist das Dichtungsprofil wiederum einen Haltefuß 7 am Basisteil 1 und eine Dichtlippe 2 aus zelligem Material auf, während der Stützschenkel 3 im Querschnitt wie dargestellt gabelförmig profiliert ist: der sich an den Basisteil 1 im Bereich des Haltefußes 7 anschliessende untere Lappen 13 des Stützschenkels 3 befindet sich in der in Fig. 4 gezeigten Ursprungsposition im Abstand vom oberen längeren Lappen; zwischen beiden Lappen befindet sich ein spaltförmiger Zwischenraum 12, der sich in Profilrichtung PR (gemäß Fig. 2) hinzieht. Der obere Lappen des Stützschenkels 3 ist im Profil länger als der untere Lappen 13 und am Ende schräg nach oben bis zur Stützfläche 3a abgebogen. Der Basisteil und die beiden Lappen des Stützschenkels bestehen aus kompaktem EPDM; dabei sind die beiden Lappen häutchenartig dünnlappig.

In Fig. 5 ist eine alternative Ausbildung des Dichtungsprofils - gewissermaßen als Kombination der Dichtungsprofile von Fig. 1 und 4 dargestellt. Vom Baisisteil 1 ausgehend erstreckt sich in etwa im rechten Winkel zur Dichtlippe 2 aus zelligem Material ein erster Stützschenkel 3', dessen Ende eine Stützfläche 3b zu bilden vermag, wenn die hier nicht gezeigte Fensterscheibe F die Stützfläche 3a am Ende des sich daran anschließenden Stützschenkels 3 in Schließrichtung SR genügend weit zurückgebogen hat. Es bildet sich dann eine sich von der Stützfläche 3b bis zur Stützfläche 3a hinziehende breitflächige Stützfläche. Beim weiteren Zudrücken der Fensterscheibe in Richtung SR werden der Schenkel 3' mit dem äußeren Lappen des Stützschenkels 3 noch weiter in Schließrichtung SR gedrückt, bis die Fensterscheibe an der Dichtlippe 2 angreift und diese eine Stück weit zur Bildung einer Dichtfläche zusammendrückt; in dieser Position legt sich ein Teil des äußeren Lappens des Stützschenkels 3 an den unteren bzw. inneren Stützschenkellappen 13 an, indem der Zwischenraum 12 entsprechend weit vermindert wird. Auch hier sind die beiden vom Schenkel 3' seitlich gabelförmig abstehenden Stützschenkellappen 3, 13 sehr dünnwandig ausgebildet.

Besonders günstige Verhältnisse werden trotz sehr breiter Stützflächen 3a, 3b und trotz verhältnismäßig großem Abstand A von der Stützfläche 3a bis zur Dichtfläche an der Dichtlippe 2 erreicht.

Auch die zungenförmigen Stützschenkel 3 nach Fig. 4 und 5 können zusätzliche Schwächungen insbesondere längs Schwächungslinien 9 beispielsweise nach Fig. 6 aufweisen, in der unterschiedliche Schwächungslinien in Form von geraden und/oder wellenförmigen Einschnitten bzw. Schwächungen in Form von Perforationslöchern 4 gezeigt sind.

Bei der wellenförmigen Ausbildung von Schwächungslinien 9 nach Fig. 7 reißen die Verbindungsstellen zwischen benachbarten Zungen 23 des Stützschenkels 3 im Eckenbereich auf, so daß die Bildung von Taschen vermieden wird. Die wellenförmigen Aufreißlinien 4a in den Halteschenkeln 3 befinden sich dann im Eckbereich in zunehmendem Abstand von der Dichtlippe 2 ihrerseits fächerförmig in größerem Abstand voneinander.

Es empfiehlt sich eine solche zellige Ausbildung, daß der elastomere Schaumstoff mit bevorzugt geschlossenen Zellen bzw. Hohlräumen einer durchschnittlichen Größe im Mikrometer- bis Millimeter-Bereich (1 - 100 µm bevorzugt) eine Dichte zwischen 0,2 und 0,8 g/cm³ aufweist.

## Patentansprüche

1. Strangförmiges um Ecken umlenkbares Dichtungsprofil aus elastomerem bzw. elastisch verformbarem Material mit einem Basisteil (1) zum Anbringen an einem Bauteil, wie einem Fensterrahmen (R), mit einer wulstartigen Dichtlippe (2) an einer Seite des Basisteils (1) und mit einem im Abstand von der Dichtlippe (2) angeordneten, Materialschwächungen aufweisenden Stützschenkel (3),
**dadurch gekennzeichnet,**
**daß** die Dichtlippe (2) aus zelligem Material besteht und zahlreiche kleine poren- oder zellenförmige Hohlräume aufweist und daß Materialschwächungen des Stützschenkels (3) durch Perforationslöcher (4) in Form kurzer Schlitze durch den Stützschenkel (3) gebildet sind, welche im wesentlichen in Normalrichtung (NR) auf den Außenrand (11) des Stützschenkels (3) verlaufen.

2. Dichtungsprofil nach Anspruch 1, **dadurch gekennzeichnet, daß** Schwächungslinien (9) im wesentlichen wellenförmig verlaufen.

3. Strangförmiges um Ecken umlenkbares Dichtungsprofil aus elastomerem bzw. elastisch verformbarem Material mit einem Basisteil (1) zum Anbringen an einem Bauteil, wie einem Fensterrahmen (R), mit einer wulstartigen Dichtlippe (2) an einer Seite des Basisteils (1) und mit einem im Abstand von der Dichtlippe (2) angeordneten, Materialschwächungen aufweisenden Stützschenkel (3),
**dadurch gekennzeichnet,**
**daß** die Dichtlippe (2) aus zelligem Material besteht und zahlreiche kleine poren- oder zellenförmige Höhlräume (10) aufweist und daß Materialschwächungen des Stützschenkels (3) als Zwischenraum (12) zwischen im wesentlichen parallelen lappenförmigen Teilen (13, 13a) des Stützschenkels (3) gebildet sind und sich der Zwischenraum (12) zwischen den lappenförmigen Teilen (13, 13a) im wesentlichen orthogonal zur Normalrichtung (NR) auf den Außenrand (11) des Stützschenkels (3) in Profillängsrichtung (PR) hinzieht.

4. Dichtungsprofil nach Anspruch 3, **dadurch gekennzeichnet, daß** die lappenförmigen Teile (13, 13a) häutchenartig dünnwandig sind.

5. Dichtungsprofil nach einem oder mehreren der vorhergehenden Ansprüche, **dadurch gekennzeichnet, daß** das zellige Material der Dichtlippe (2) eine im wesentlichen geschlossenzellige Struktur mit kleinen Hohlräumen (10) einer durchschnittlichen Größe zwischen 1 und 100 µm und eine Dichte zwischen 0,2 und 0,8 g/cm² aufweist.

6. Dichtungsprofil nach einem der vorhergehenden Ansprüche, **dadurch gekennzeichnet, daß** der Basisteil (1) eine Aufnahmenut (5) an der der Dichtlippe (2) und der Stützfläche (3a) des Stützschenkels (3) abgewandten Seite aufweist.

7. Dichtungsprofil nach einem der vorhergehenden Ansprüche, **dadurch gekennzeichnet, daß** der Basisteil (1) einen Haltefuß (7) an der der Dichtlippe (2) und der Stützfläche (3a) des Stützschenkels (3) abgewandten Seite aufweist.

## Claims

1. Profiled sealing strip deflectable around corners, consisting of an elastomer material or a resiliently deformable material and comprising a base part (1) for attachment on a part of a building, such as a window frame (R), a bead-like sealing lip (2) on one side of said base part (1) and a supporting leg (3) presenting weakened portions in the material and disposed at a spacing from said sealing lip (2),
**characterised in**
**that** said sealing lip (2) consists of a cellular material and presents a great number of small pore- or cell-like cavities, and that weakened portions in the material of said supporting leg (3) are formed by perforation holes (4) in the form of short slots through said supporting leg (3), which extend substantially in the normal direction (NR) towards the outer edge (11) of said supporting leg.

2. Profiled sealing strip according to Claim 1, **characterised in that** weakening lines (9) extend substantially in the form of waves.

3. Profiled sealing strip deflectable around corners, consisting of an elastomer material or a resiliently deformable material and comprising a base part (1) for attachment on a part of a building, such as a window frame ®, a bead-like sealing lip (2) on one side of said base part (1) and a supporting branch (3) presenting weakened portions in the material and disposed at a spacing from said sealing lip (2),
**characterised in**
**that** said sealing lip (2) consists of a cellular material and presents a great number of small pore- or cell-like cavities (10), and that weakened portions in the material of said supporting leg (3) are formed by space (12) between substantially parallel lobe-like parts (13, 13a) of said supporting leg (3) and that said space (12) between said lobe-like parts (13, 13a) extends substantially in a direction orthogonal on said normal direction (NR) towards the outer edge (11) of said supporting leg (3) along the longitudinal extension of the profiled strip (PR).

4. Profiled sealing strip according to Claim 3, **characterised in that** said lobe-like parts (13, 13a) have thin walls in the form of membranes.

5. Profiled sealing strip according to one or several of the preceding Claims, **characterised in that** said cellular material of said sealing lip (2) presents a substantially closed-cell cellular structure including small cavities (10) of an average size between 1 and 100 µm and a density between 0.2 and 0.8 g/cm².

6. Profiled sealing strip according to any of the preceding Claims, **characterised in that** said base part (1) comprises a receiving groove (5) on the side turned away from said sealing lip (2) and the supporting area (3a) of said supporting leg (3).

7. Profiled sealing strip according to any of the preceding Claims, **characterised in that** said base part (1) comprises a holding base (7) on the side turned away from said sealing lip (2) and the supporting area (3a) of said supporting leg (3).

## Revendications

1. Joint d'étanchéité profilé repliable autour des coins, composé d'un matériau d'élastomère ou d'un matériau élastiquement déformable et comprenant une partie de base (1) pour l'attache à une partie d'un bâtiment, comme un châssis dormant ®, une lèvre de joint (2) en bourrelet sur un côté de ladite base part (1) et une branche d'appui (3), qui présente des parties faibles dans son matériau et qui est disposée à un écart de ladite lèvre de joint (2),
**caractérisé en ce**
**que** ladite lèvre de joint (2) consiste en un matériau cellulaire et présente un grand nombre de petites cavités sous forme de pores ou cellules, et en ce que des parties faibles dans le matériau de ladite branche d'appui (3) sont formées par des trous perforés (4) sous forme de courtes fentes à travers ladite branche d'appui (3), qui s'étendent essentiellement le long de la direction normale (NR) vers le bord extérieur (11) de ladite branche d'appui.

2. Joint d'étanchéité profilé selon la revendication 1, **caractérisé en ce que** des lignes d'affaiblissement (9) s'étendent essentiellement sous forme d'ondes.

3. Joint d'étanchéité profilé repliable autour des coins, composé d'un matériau d'élastomère ou d'un matériau élastiquement déformable et comprenant une partie de base (1) pour l'attache à une partie d'un bâtiment, comme un châssis dormant ®, une lèvre de joint (2) en bourrelet sur un côté de ladite base part (1) et une branche d'appui (3) et une branche d'appui (3), qui présente des parties faibles dans son matériau et qui est disposée à un écart de ladite lèvre de joint (2),
**caractérisé en ce**
**que** ladite lèvre de joint (2) consiste en un matériau cellulaire et présente un grand nombre de petites cavités sous forme de pores ou cellules, et en ce que des parties faibles dans le matériau de ladite branche d'appui (3) sont formées par un intervalle (12) entre des parties essentiellement sous forme de languettes (13, 13a) de ladite branche d'appui (3), et en ce que ledit intervalle (12) entre lesdits parties essentiellement sous forme de languettes (13, 13a) s'étend essentiellement en une direction orthogonale sur ladite direction normale (NR) vers le bord extérieur (11) de ladite branche d'appui (3) le long de l'étendue longitudinale du joint profilé (PR).

4. Joint d'étanchéité profilé selon la revendication 3, **caractérisé en ce que** lesdites parties sous forme de languettes (13, 13a) ont des parois minces sous forme de membranes.

5. Joint d'étanchéité profilé selon une ou plusieurs des revendications précédentes, **caractérisé en ce que** ledit matériau cellulaire de ladite lèvre de joint (2) présente une structure essentiellement cellulaire à alvéoles fermées, qui renferme des petites cavités (10) d'une taille moyenne entre 1 et 100 µm et une densité entre 0,2 et 0,8 g/cm².

6. Joint d'étanchéité profilé selon une quelconque des revendications précédentes, **caractérisé en ce que** ladite partie de base (1) comprend une rainure des logement (5) du côté détourné de ladite lèvre de joint (2) et l'aire d'appui (3a) de ladite branche d'appui (3).

7. Joint d'étanchéité profilé selon une quelconque des revendications précédentes, **caractérisé en ce que** ladite partie de base (1) comprend une base de retenue (7) du côté détourné de ladite lèvre de joint (2) et l'aire d'appui (3a) de ladite branche d'appui (3).
